# EUROPÄISCHE PATENTSCHRIFT

(11) **EP 0 573 806 B1**
(45) Veröffentlichungstag und Bekanntmachung des Hinweises auf die Patenterteilung: **17.07.1996**
(21) Anmeldenummer: 93107787.9
(22) Anmeldetag: 13.05.1993
(51) Int. Cl.: G01G 21/00, G01G 21/24

(54) **Präzisionswaage**
Precision balance
Balance de précision

(30) Priorität: 09.06.1992 CH 826/92
(43) Veröffentlichungstag der Anmeldung: 15.12.1993
(73) Patentinhaber: Mettler-Toledo AG, CH-8606 Greifensee (CH)
(72) Erfinder: Burkhard, Hans-Rudolf, CH-8603 Schwerzenbach (CH)

(56) Entgegenhaltungen:
- EP-A- 0 227 850
- DE-U- 9 203 796
- PATENT ABSTRACTS OF JAPAN vol. 5, no. 202 (P-95)(874) 22. Dezember 1981 & JP-A-56125628

## Beschreibung

Die Erfindung betrifft eine Präzisionswaage mit einem Lastaufnehmer und mit einer mit dem Lastaufnehmer verbundenen und in einem Waagengehäuse angeordneten Messzelle.

Bei derartigen Präzisionswaagen wird eine auf die Waagschale wirkende Kraft über einen Lastaufnehmer in eine Kraftmesszelle geleitet, die im Waagengehäuse eingesetzt und mit diesem verbunden, üblicherweise verschraubt ist. Durch die Verschraubung der Messzelle mit dem Gehäuse werden Kräfte in die Messzelle eingeleitet, die das Wägeresultat beeinflussen können. Um den Einfluss der durch die Verschraubung auf die Messzelle wirkenden Verspannungen, die, vom Aufbau und der Stabilität des Waagengehäuses abhängig, unterschiedlich sein können, zu kompensieren, ist es notwendig, jede Messzelle nach dem Einsetzen in das Waagengehäuse abzugleichen. Dies ist im Fabrikationsprozess, d.h. beim Herstellerwerk mit verhältnismässig vertretbarem Aufwand möglich. Ausserhalb des Herstellerwerkes entstehen dadurch Probleme, insbesondere wenn durch unsachgemässe Behandlung oder nach langem Gebrauch der Waage oder infolge Materialfehlern zu einem späteren Zeitpunkt die Messzelle einer Waage ausgebaut und repariert oder ersetzt werden muss. Ein Abgleich beim Kunden, sei es durch Personal des Herstellerwerkes oder durch eigenes Werkstattpersonal, ist äusserst schwierig. Ein unsachgemässer Abgleich führt immer zu einer Verfälschung des Wägeresultates. Die bekannte Art des Einbaus der Messzelle führt auch dazu, dass für jeden Waagentyp die Messzelle an diesen angepasst werden muss. Dies bedingt die Herstellung kleiner Serien und führt folglich zu höheren Herstellkosten.

Der vorliegenden Erfindung liegt die Aufgabe zu Grunde, eine Präzisionswaage zu schaffen, bei welcher der Abgleich des Wägesystems auf rationelle Weise erfolgen kann.

Diese Aufgabe wird gelöst durch eine Präzisionswaage mit den Merkmalen des Patentanspruchs 1.

Die Anordnung der Messzelle in einem U-förmigen Zwischenhalter ermöglicht es, die Messzelle ausserhalb des Waagengehäuses abzugleichen und die abgeglichene Einheit in das Waagengehäuse einzusetzen. Eine solche abgeglichene Einheit vereinfacht nicht nur das Abgleichen im Herstellerwerk und die darauf folgende Montage in der neuen Waage, sondern abgeglichene Einheiten können auch als Austauschteile versandt und in ältere Waagen eingebaut werden. Die hohe Verwindungssteifigkeit des Zwischenhalters - bezogen auf den Lastbereich der Messzelle - gewährleistet, dass nach der Befestigung des Zwischenhalters im Gehäuse der Waage der Abgleich der Messzelle nicht beeinträchtigt wird. Im weiteren müssen an die Genauigkeit der Befestigungsflächen für den Zwischenhalter im Waagengehäuse geringere Anforderungen gestellt werden. Die Herstellung genauer Auflageflächen der Messzelle am Zwischenhalter ist wesentlich einfacher als die Bearbeitung von Auflageflächen innerhalb eines Waagengehäuses. Die hohe Präzision der Auflage der Messzelle am Zwischenhalter vermindert die Einleitung von das Messresultat beeinflussenden Kräften durch die Verbindungselemente zwischen dem Zwischenhalter und der Messzelle. Die Messzelle kann am Zwischenhalter derart befestigt werden, dass auf den Zwischenhalter einwirkende Kräfte bei dessen Befestigung am Waagengehäuse keine störenden Einflüsse auf die Messzelle ausüben.

Bei einer Befestigung der Messzelle durch ein Spannmittel können die durch Schrauben unvermeidbaren in das Innere der Messzelle geleiteten Kräfte vollständig vermieden werden. Die von den Befestigungsschrauben ausgehenden Spannkräfte werden durch eine entsprechend dimensionierte Spannplatte sowie den Zwischenkörper aufgenommen und von den auf Spannungen empfindlichen Teilen der Messzelle ferngehalten. Der Aufbau des Waagengehäuses oder die Anordnung der Messzelle innerhalb des Waagengehäuses hat keinen Einfluss auf deren bereits erfolgten Abgleich.

Anhand von zwei Ausführungsbeispielen von Zwischenhaltern wird die Erfindung näher erläutert. Es zeigen:
- Figur 1: eine schematische Darstellung einer Präzisonswaage,
- Figur 2: eine perspektivische Darstellung eines Zwischenhalters für eine Schraubverbindung,
- Figur 3: einen Grundriss des Zwischenhalters von Figur 2,
- Figur 4: eine Aufsicht auf eine weitere Ausgestaltung eines Zwischenhalters mit Klemmbefestigung,
- Figur 5: einen Teilquerschnitt längs Linie V-V in Figur 4.

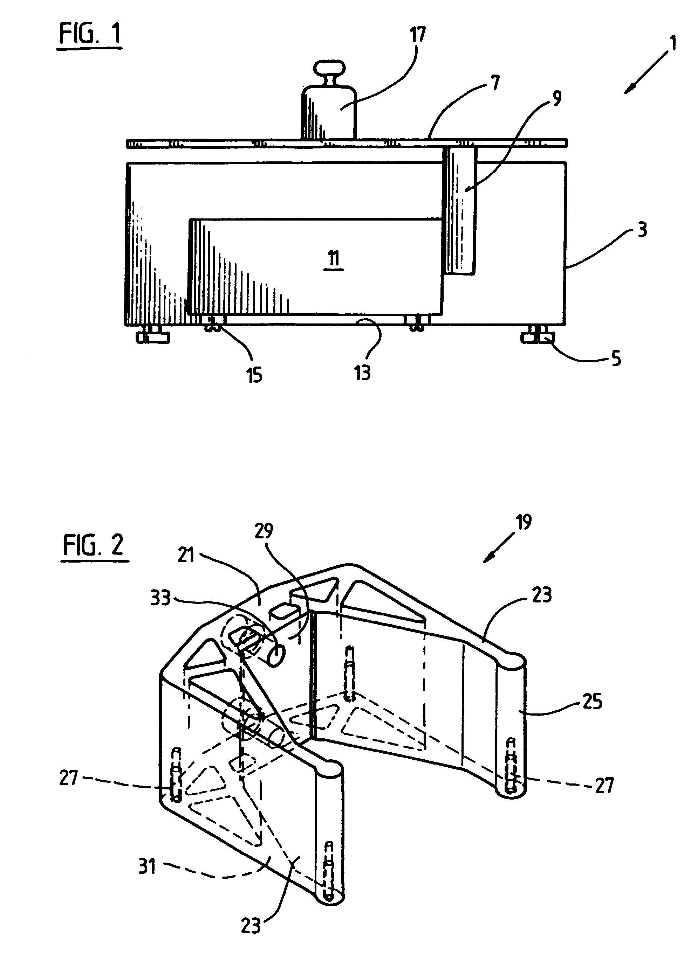

In der in Figur 1 schematisch dargestellten herkömmlichen oberschaligen Präzisionswaage 1 ist mit Bezugszeichen 3 das Waagengehäuse bezeichnet, welches auf Füssen 5 steht und eine Waagschale 7 aufweist. Die Waagschale 7 ist über einen Lastaufnehmer 9 mit einer schematisch als Rechteck dargestellten Kraftmess- oder Messzelle 11 verbunden. Die Messzelle 11 liegt direkt oder mit entsprechenden Stützflächen 15 auf dem Boden 13 des Waagengehäuses 3 auf und ist an den Auflagestellen mit diesem kraftschlüssig verbunden. Auf der Waagschale 7 ist zur Darstellung einer Last ein Gewicht 17 aufgesetzt. Der Boden 13 des Waagengehäuses 3 ist in mindestens im Bereich der Auflagestellen 15 in einem engen Toleranzbereich bearbeitet, um eine definierte Auflagefläche für die Messzelle 11 zu bilden.

Figur 2 stellt einen U-förmigen Zwischenhalter 19 gemäss der Erfindung dar, der zur Aufnahme der Messzelle 11 bestimmt ist. Der Zwischenhalter 19 kann aus einem gezogenen Aluminiumprofil hergestellt, aus dem Vollen gearbeitet oder gegossen sein und besteht aus einer Basis 21 und zwei von dieser abstehenden` ein "U" bildenden Schenkeln 23. Der Querschnitt des Zwischenhalters 21 ist derart ausgestaltet, dass eine im Verhältnis zur Grösse des Lastbereiches der Waage 1 optimale Verwindungsfestigkeit erlangt werden kann. In den Enden 25 der Schenkel 23 sind Gewindebohrungen 27 angebracht. Mindestens eine weitere zentral angebrachte Gewindebohrung 27 kann stirnseitig in der Grundfläche der Basis 21 eingelassen sein. In der gezeichneten Variante ist anstelle einer weiteren Gewindebohrung 27 in den Uebergangsbereichen von den Schenkeln 23 in die Basis 21 je eine Gewindebohrung 27 vorgesehen. Die Bohrungen 27 dienen der Befestigung des Zwischenhalters 19 im Gehäuseboden 13.

Die zwischen den Schenkeln 23 liegende Fläche 29 der Basis 21 ist exakt plan bearbeitet und liegt zur in Figur 2 unten liegenden Stirnfläche 31 exakt in einem rechten Winkel. Auch die Stirnfläche 31 ist vorzugsweise in engen Toleranzen plan bearbeitet, sofern keine Auflage- oder Stützflächen 15 am Gehäuseboden 13 vorgesehen sind. Dies ist bei einem Werkstück dieser Gattung ohne Probleme möglich. Zwei Bohrungen 33 in der Basis 21 sind dazu bestimmt, je eine Schraube 35 zur Befestigung der Messzelle 11 am Zwischenhalter 19 aufzunehmen. Dazu sind in der Seitenfläche 37 der Messzelle 11 entsprechend fluchtende Gewindebohrungen 39 angebracht. Die Seitenfläche 37 ist ebenfalls in engen Toleranzen plan bearbeitet, damit eine verzugsfreie Auflage der Messzelle 11 an der Fläche 29 am Zwischenhalter 19 erfolgt.

Nach der Befestigung der Messzelle 11 am Zwischenhalter 19 kann diese ausserhalb des Waagengehäuses 3 abgeglichen werden. Der Abgleich der Messzelle 11 ist sehr einfach, da keine weiteren, den Zugang zur Messzelle 11 behindernden Elemente der Waage stören. Die fertig abgeglichene Messzelle 11 kann anschliessend in ein Waagengehäuse 3 eingebaut werden, indem beispielsweise durch den Boden 13 des Waagengehäuses 3 der Zwischenhalter 19 angeschraubt wird. Die Auflagefläche auf dem Boden 13 des Waagengehäuses 3 braucht dazu nicht mit hoher Präzision bearbeitet zu werden, da kein Verzug des in sich starren Zwischenhalters 19 durch den weniger starr ausgebildeten Boden 13 zu erwarten ist.

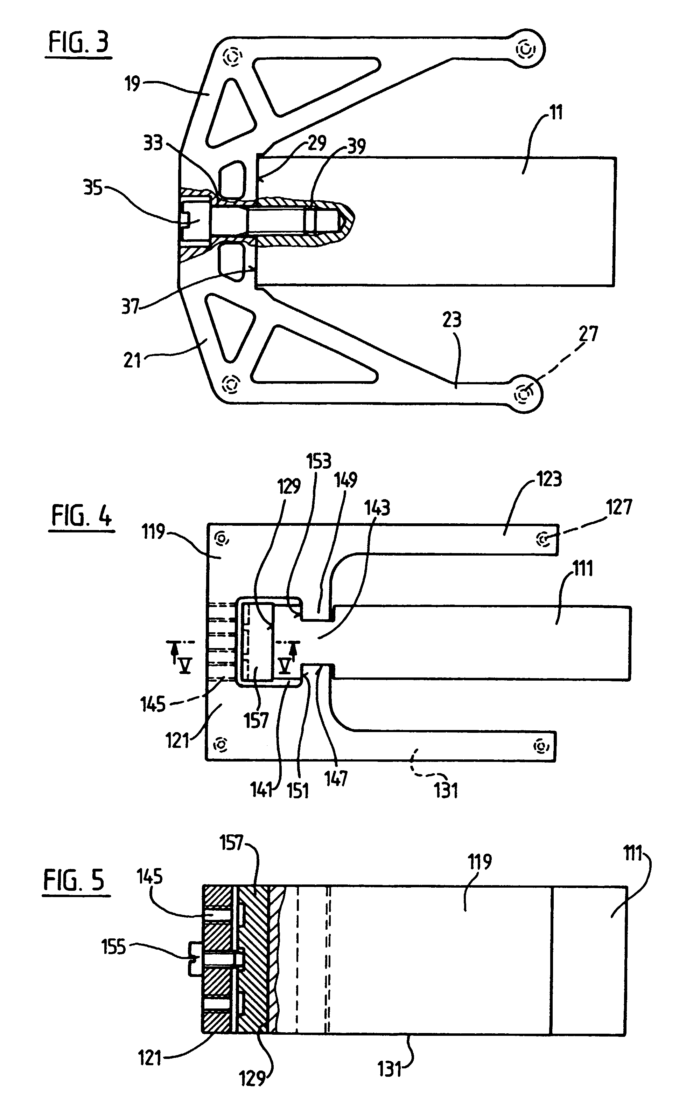

In der Ausgestaltung der Erfindung gemäss den Figuren 4 und 5 ist der Zwischenhalter 119 ebenfalls U-förmig ausgebildet und weist zwei Schenkel 123 auf, die sich parallel zur Messzelle 111 erstrecken. Die Messzelle 111 ist an der Basis in einer Ausnehmung 141 gehalten. Die senkrecht zur unteren Stirnfläche 131 des Zwischenhalters 121 verlaufende Ausnehmung 141 weist schenkelseitig einen Schlitz 143 auf. In der Basis 121 ist eine Mehrzahl von Gewindebohrungen 145, zum Beispiel neun - je drei Reihen à drei Bohrungen übereinander - eingelassen.

An der Messzelle 111 ist seitlich je eine Nut 147 eingelassen, welche dazu bestimmt ist, die seitlichen Bereiche 149 des Schlitzes 143 aufzunehmen. Die seitlichen Begrenzungsflächen 151 der Nuten 147 sowie die Flanken 153 der seitlichen Bereiche 149 sind in engen Toleranzen bearbeitet, um eine einwandfreie flächenförmige Auflage zu ermöglichen. Alternativ zu einer grossflächigen Auflage können auch mehrere kleine Auflageflächen, beispielsweise oben und unten je eine, vorgesehen werden.

In den Gewindebohrungen 145 sind Spannschrauben 155 eingedreht, deren vordere Enden in Anlage mit einer Spannplatte 157 stehen, welche an der Fläche 129 der Messzelle 111 anliegt Die Spannschrauben 155 können auch direkt an der Fläche 129 anliegen.

Die Befestigung der Messzelle 111 im Zwischenhalter 119 kann in einfacher Weise dadurch erfolgen, dass die Messzelle 111, geführt in den Nuten 147, in den Schlitz 143 eingeführt wird und durch die Schrauben 155 an die Flanken 153 angepresst wird. Die Messzelle 111 bleibt dadurch weitgehend spannungsfrei, da keine Kräfte durch Gewindebohrungen ins Innere eingeführt werden.

Das erfindungsgemässe Konzept ist mit Messzellen unterschiedlicher Art anwendbar. Beispielsweise kommen Zellen mit elektromagnetischer Kompensation der Last oder Saiten-Messzellen in Betracht.

## Patentansprüche

1. Präzisionswaage mit einem Lastaufnehmer (9) und mit einer mit dem Lastaufnehmer verbundenen und in einem Waagengehäuse (3) angeordneten Messzelle (11,111) dadurch gekennzeichnet, dass die Messzelle (11,111) wenigstens teilweise zwischen den Schenkeln (23,123) eines U-förmigen Zwischenhalters (19,119) angeordnet und an diesem im Bereich seiner die Schenkel (23,123) verbindenden Basis (21,121) befestigt ist und dass der Zwischenhalter (19,119) mit dem Waagegehäuse (3) verbunden ist.

2. Waage nach Anspruch 1, dadurch gekennzeichnet, dass der Zwischenhalter (19,119) in den Grenzen des Lastbereiches der Waage (1) verwindungssteif ausgebildet ist.

3. Waage nach einem der Ansprüche 1 oder 2, dadurch gekennzeichnet, dass die Verbindung der Messzelle (11,111) mit dem Zwischenhalter (19,119) an der die Schenkel (23,123) verbindenden Basis (21,121) des Zwischenhalters (19,119) und in dessen zentralem verwindungsneutralem Bereich erfolgt.

4. Waage nach einem der Ansprüche 1 bis 3, dadurch gekennzeichnet, dass die Messzelle (11) mit dem Zwischenhalter (19) verschraubt ist.

5. Waage nach einem der Ansprüche 1 bis 3, dadurch gekennzeichnet, dass die Messzelle (111) durch Spannmittel am Zwischenhalter (119) anliegend festgeklemmt gehalten ist.

6. Waage nach Anspruch 5, dadurch gekennzeichnet, dass als Spannmittel Schrauben (155), die in Gewindebohrungen (145) in der Basis (121) geführt sind und die Messzelle (111) am Zwischenhalter (119) festspannen, vorgesehen sind.

7. Waage nach Anspruch 6, dadurch gekennzeichnet, dass zwischen den Schrauben (155) und der Messzelle (111) eine die von den Schrauben (155) punktförmig wirkenden Kräfte verteilende Spannplatte (157) eingesetzt ist.

## Claims

1. A precision balance comprising a load-receiving means (9) and a measuring cell (11, 111) which is connected to the load-receiving means and which is arranged in a balance housing (3), characterised in that the measuring cell (11, 111) is at least partially arranged between the limbs (23, 123) of a U-shaped intermediate holder (19, 119) and is fixed to the latter in the region of its base (21, 121) which connects the limbs (23, 123), and that the intermediate holder (19, 119) is connected to the balance housing (3).

2. A balance according to claim 1 characterised in that the intermediate holder (19, 119) is of a torsionally stiff configuration in the limits of the load region of the balance (1).

3. A balance according to one of claims 1 and 2 characterised in that the connection of the measuring cell (11, 111) to the intermediate holder (19, 119) is effected at the base (21, 121) of the intermediate holder (19, 119), which base connects the limbs (23, 123), and in the central torsionally neutral region of the intermediate holder.

4. A balance according to one of claims 1 to 3 characterised in that the measuring cell (11) is screwed to the intermediate holder (19).

5. A balance according to one of claims 1 to 3 characterised in that the measuring cell (111) is held in fixedly clamped relationship in contact against the intermediate holder (119) by clamping means.

6. A balance according to claim 5 characterised in that provided as the clamping means are screws (155) which are guided in screwthreaded bores (145) in the base (121) and which clamp the measuring cell (111) fast to the intermediate holder (119).

7. A balance according to claim 6 characterised in that a clamping plate (157) is inserted between the screws (155) and the measuring cell (111), for distributing the forces which act in a punctiform manner from the screws (155).

## Revendications

1. Balance de précision comprenant un capteur de charge (9) et une cellule de mesure (11, 111) reliée au capteur de charge et disposée dans un coffret de balance (3), caractérisée en ce que la cellule de mesure (11, 111) est disposée au moins en partie entre les branches (23, 123) d'un support intermédiaire (19, 119) en forme de U et est fixée à celui-ci dans la zone de sa base (21, 121) reliant entre elles les branches (23, 123), et en ce que le support intermédiaire (19, 119) est relié au coffret (3) de la balance.

2. Balance selon la revendication 1, caractérisée en ce que le support intermédiaire (19, 119) est résistant à la torsion dans les limites de la portée de la balance (1).

3. Balance selon l'une des revendications 1 ou 2, caractérisée en ce que la liaison de la cellule de mesure (11, 111) avec le support intermédiaire (19, 119) s'effectue au niveau de la base (21, 121) du support intermédiaire (19, 119) qui relie les branches (23, 123) et dans sa zone centrale dépourvue de torsion.

4. Balance selon l'une des revendications 1 à 3, caractérisée en ce que la cellule de mesure (11) est reliée par vissage au support intermédiaire (19).

5. Balance selon l'une des revendications 1 à 3, caractérisée en ce que la cellule de mesure (111) est bloquée contre le support intermédiaire (119) à l'aide de moyens de serrage.

6. Balance selon la revendication 5, caractérisée en ce que les moyens de serrage prévus sont des vis (155) qui sont introduites dans des trous taraudés (145) de la base (121) et qui serrent la cellule de mesure (111) contre le support intermédiaire (119).

7. Balance selon la revendication 6, caractérisée en ce que, entre les vis (155) et la cellule de mesure (111), est insérée une plaque de serrage (157) qui répartit les forces ponctuelles générées par les vis (155).
